(19) Europäisches Patentamt
European Patent Office
Office européen des brevets

(11) **EP 4 112 585 A1**

(12) **EUROPEAN PATENT APPLICATION**
published in accordance with Art. 153(4) EPC

(43) Date of publication:
**04.01.2023 Bulletin 2023/01**

(21) Application number: **21761327.2**

(22) Date of filing: **17.02.2021**

(51) International Patent Classification (IPC):
***C04B 35/64*** (2006.01)    ***C04B 35/117*** (2006.01)

(52) Cooperative Patent Classification (CPC):
**C04B 35/117; C04B 35/64**

(86) International application number:
**PCT/JP2021/005908**

(87) International publication number:
**WO 2021/172128 (02.09.2021 Gazette 2021/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.02.2020 JP 2020030911**

(71) Applicants:
• **SUMITOMO CHEMICAL COMPANY, LIMITED**
**Tokyo 103-6020 (JP)**
• **Japan Fine Ceramics Center**
**Nagoya-shi, Aichi 456-8587 (JP)**

(72) Inventors:
• **KIMURA, Teiichi**
**Nagoya-shi, Aichi 456-8587 (JP)**
• **SUEHIRO, Satoshi**
**Nagoya-shi, Aichi 456-8587 (JP)**
• **NASU, Tomomichi**
**Tsukuba-shi, Ibaraki 300-3294 (JP)**

(74) Representative: **Vossius & Partner**
**Patentanwälte Rechtsanwälte mbB**
**Siebertstraße 3**
**81675 München (DE)**

(54) **METHOD FOR MANUFACTURING SINTERED BODY**

(57)    Disclosed is a method for manufacturing a sintered body by sintering with laser irradiation, the method for manufacturing a sintered body, including: a raw material providing step of providing a raw material containing a ceramic powder and a laser absorbing oxide having an absorption rate at a laser wavelength higher by 5% or more than that of the ceramic powder; an article forming step of forming an article formed from the raw material, an article partially including a region consisting of only the raw material, or an article formed from the raw material and formed on a base material; and a sintering step of irradiating the article with a laser to form a sintered portion.

[FIG.1]

**Description**

TECHNICAL FIELD

The present disclosure relates to a method for manufacturing a sintered body. In particular, the present invention relates to a method for manufacturing a sintered body by laser irradiation.

BACKGROUND ART

Regarding a method for manufacturing a sintered body, a method for manufacturing a sintered body containing ceramics such as alumina, for example, using yttria as a sintering aid is known. In recent years, as the method for manufacturing a sintered body, a method of sintering by laser irradiation has been adopted instead of sintering using a heating furnace. For example, Patent Literature 1 discloses a method for manufacturing a part, including preparing a mixed powder by mixing a ceramic powder with an inorganic binder powder, forming the mixed powder into an article by an additive manufacturing process, and densifying the article by transient liquid phase sintering. Patent Literature 1 discloses that, for example, $Si_1N_1$-$Y_2O_3$-AlN containing yttria is used as the ceramic powder, and discloses that the transient liquid phase sintering is performed using a laser.

CITATION LIST

PATENT LITERATURE

Patent Literature 1: JP-T-2016-527161

SUMMARY OF THE INVENTION

TECHNICAL PROBLEMS

However, even when the article is irradiated with a laser, there is a problem that sinterability is not sufficient or time is required for sintering. The present disclosure has been made in view of the above circumstances, and an object of the present disclosure is to provide a method for irradiating an article containing ceramics with a laser to manufacture a sintered body in a short time.

SOLUTION TO PROBLEMS

Aspect 1 of the present invention provides a method for manufacturing a sintered body by sintering with laser irradiation, the method comprising:

a raw material providing step of providing a raw material containing a ceramic powder and a laser absorbing oxide having an absorption rate at a laser wavelength higher by 5% or more than that of the ceramic powder;
an article forming step of forming an article formed from the raw material, an article partially including a region consisting of only the raw material, or an article formed from the raw material and formed on a base material; and
a sintering step of irradiating the article with a laser to form a sintered portion.

Aspect 2 of the present invention is the method for manufacturing a sintered body according to Aspect 1, in which in the article forming step, the ceramic powder and the laser absorbing oxide are mixed and molded into an article shape to form an article.

Aspect 3 of the present invention is the method for manufacturing a sintered body according to Aspect 1, in which in the article forming step, the ceramic powder is molded into an article shape to obtain a molded article, and then the laser absorbing oxide is disposed on a surface of the molded article to form an article.

Aspect 4 of the present invention is the method for manufacturing a sintered body according to any one of Aspects 1 to 3, in which the laser absorbing oxide is one or more selected from the group consisting of magnesium oxide and rare earth element-containing oxide.

Aspect 5 of the present invention is the method for manufacturing a sintered body according to Aspect 4, in which the rare earth element-containing oxide is yttrium oxide.

Aspect 6 of the present invention is the method for manufacturing a sintered body according to any one of Aspects 1 to 5, in which in the raw materials, a ratio of the laser absorbing oxide is 1% by mass or more and 65% by mass or less, and

a ratio of the ceramic powder is 35% by mass or more and 99% by mass or less.

Aspect 7 of the present invention is the method for manufacturing a sintered body according to any one of Aspects 1 to 6, in which the laser is any one of a Nd: YAG laser, a Nd: YVO laser, a Nd: YLF laser, a titanium sapphire laser, and a carbon dioxide laser.

Aspect 8 of the present invention is the method for manufacturing a sintered body according to any one of Aspects 1 to 7, in which in the sintering step, the sintered portion is formed by laser irradiation in an air atmosphere.

Aspect 9 of the present invention is the method for manufacturing a sintered body according to any one of Aspects 1 to 7, in which in the sintering step, the sintered portion is formed by laser irradiation in a non-oxidizing atmosphere, and then laser irradiation of the sintered portion is further performed in an air atmosphere.

Aspect 10 of the present invention is the method for manufacturing a sintered body according to any one of Aspects 1 to 9, in which in the raw material providing step, white yttrium oxide is irradiated with a laser in a non-oxidizing atmosphere to obtain black yttrium oxide as the laser absorbing oxide.

Aspect 11 of the present invention is the method for manufacturing a sintered body according to any one of Aspects 1 to 10, in which the ceramic powder contains at least one selected from the group consisting of aluminum oxide, aluminum nitride, and aluminum oxynitride.

ADVANTAGEOUS EFFECTS OF INVENTION

According to the present disclosure, it is possible to provide a method for manufacturing a sintered body in a short time by irradiating an article containing ceramics with a laser.

BRIEF DESCRIPTION OF THE DRAWINGS

Figs. 1A to 1D are schematic cross-sectional views showing an example of a method for manufacturing a sintered body according to an embodiment of the present invention.

Figs. 2A to 2D are schematic cross-sectional views showing another example of the method for manufacturing a sintered body according to the embodiment of the present invention.

Figs. 3A to 3C are schematic cross-sectional views showing another example of the method for manufacturing a sintered body according to the embodiment of the present invention.

Fig. 4 is a graph showing results of measuring absorption rates of black yttrium oxide and a ceramic powder at each laser wavelength in Example.

Fig. 5 is a scanning electron micrograph of the sintered body of Example 1.

Fig. 6 is a scanning electron micrograph of the sintered body of Example 2.

Fig. 7 is a scanning electron micrograph enlarging a broken line portion in Fig. 6.

Fig. 8A is a scanning electron micrograph of the sintered body of Comparative Example 1.

Fig. 8B is a scanning electron micrograph obtained by enlarging a part of the scanning electron micrograph of Fig. 8A.

DESCRIPTION OF EMBODIMENTS

The present inventors have intensively studied to achieve a method for manufacturing a sintered body in a short time by irradiating an article containing ceramics with a laser. As a result, the present inventors have found that an article containing a laser absorbing oxide according to the present disclosure may be an object to be sintered, and as the method for manufacturing a sintered body according to the present disclosure using the article, the method for manufacturing a sintered body by sintering with laser irradiation may include:

[step 1] a raw material providing step of providing a raw material containing a ceramic powder and a laser absorbing oxide having an absorption rate at a laser wavelength higher by 5% or more than that of the ceramic powder;

[step 2] an article forming step of forming an article formed from the raw material, an article partially including a region consisting of only the raw material, or an article formed from the raw material and formed on a base material; and

[step 3] a sintering step of irradiating the article with a laser to form a sintered portion.

Hereinafter, each step of the method for manufacturing a sintered body of the present disclosure will be described.

[Step 1] Raw material providing step

First, a raw material containing a ceramic powder and a laser absorbing oxide having an absorption rate at a laser wavelength used for sintering higher by 5% or more than that of the ceramic powder is provided. Details of the raw materials will be described in the order of the laser absorbing oxide, the ceramic powder, and other materials that may be contained.

(Laser absorbing oxide)

As described above, as the laser absorbing oxide, one in which the absorption rate of a laser used for sintering is higher by 5% or more than that of the ceramic powder is provided. Examples of the laser include a laser having a wavelength of 500 nm to 11 pm. Specific examples of the laser include a Nd: YAG laser, a Nd: YVO laser, a Nd: YLF laser, a titanium sapphire laser, and a carbon dioxide laser. The absorption rate of the laser used for sintering can be in a range of preferably 5% or more, more preferably 10% or more, still more preferably 15% or more, even more preferably 30% or more, and particularly preferably 50% or more as compared with the ceramic powder. The difference in the absorption rate is preferably as high as possible, and the upper limit is not particularly limited. The upper limit of the difference in the absorption rate can be, for example, 95%.

As the laser absorbing oxide, for example, one or more selected from the group consisting of magnesium oxide and rare earth element-containing oxides (Y, La, Ce, Nd, Gd, Eu, Dy, and the like as rare earth elements) are preferably used. Among them, rare earth element-containing oxides are more preferable, and yttrium oxide is still more preferable.

The shape of the laser absorbing oxide is not limited, and may be, for example, particulate, powder, block, sheet, fiber, or rod. A BET specific surface area of the laser absorbing oxide can be, for example, within a range of 0.1 to 500 $m^2/g$, preferably 1 to 50 $m^2/g$, and more preferably 20 to 40 $m^2/g$.

A mechanism of the laser absorbing oxide contributing to promotion of a sintering reaction in a laser irradiation step has not been sufficiently clarified, and is presumed as follows. That is, it is considered that the laser absorbing oxide absorbs an energy of the laser, the laser absorbing oxide itself generates heat, and ceramic particles around the laser absorbing oxide are heated by the heated laser absorbing oxide, whereby the ceramic particles easily absorb the energy of the laser, and sintering is promoted. Thus, it is preferable that the laser absorbing oxide and the ceramic powder are uniformly dispersed in a laser sintered portion in the article. When the laser absorbing oxide is used, volatilization and the like do not occur during sintering, so that a sintered body having a good surface texture can be obtained.

From the above viewpoint, the laser absorbing oxide used in the embodiment of the present invention is one having an absorption rate at a laser wavelength used for sintering higher by 5% or more than that of the ceramic powder.

(Preparation of laser absorbing oxide)

The laser absorbing oxide can be obtained by irradiating white oxide, for example, one or more selected from the group consisting of white magnesium oxide and white rare earth element-containing oxide with a laser having a wavelength of 500 nm to 11 pm. Examples of the laser include a Nd: YAG laser, a Nd: YVO laser, a Nd: YLF laser, a titanium sapphire laser, and a carbon dioxide laser. A laser power is preferably 50 to 2000 $W/cm^2$, and more preferably 100 to 500 $W/cm^2$. The laser used for preparing the laser absorbing oxide may be the same as or different from the laser used for sintering. For example, as in the case of using aluminum oxide as the ceramic powder, the laser power at the time of sintering can be set to 100 to 1000 W, preferably 200 to 800 W, and more preferably 250 to 500 W. Alternatively, as in the case of using aluminum nitride as the ceramic powder, the laser power at the time of sintering can be set to 50 to 1000 W, preferably 50 to 800 W, and more preferably 100 to 500 W.

An irradiation time of the laser is preferably 1 second to 60 minutes, and more preferably 5 seconds to 30 minutes. A laser irradiation atmosphere is not particularly limited, and is preferably a non-oxidizing atmosphere such as a reduced pressure atmosphere, a vacuum atmosphere, a nitrogen atmosphere, or an argon atmosphere from the viewpoint of promoting the formation of the laser absorbing oxide.

As a preferred embodiment of the laser absorbing oxide, black yttrium oxide will be described as an example. Black yttrium oxide (sometimes referred to as "black yttria") is a compound represented by $Y_2O_{3-x}$ (X is less than 1) in which white yttrium oxide (III) ($Y_2O_3$, sometimes referred to as "white yttria") is deficient in oxygen. This black yttrium oxide can be obtained, for example, by powder-compact molding white yttrium oxide, applying carbon to the surface, and applying laser, for example, under vacuum or under a non-oxidizing atmosphere such as an argon or nitrogen atmosphere. After the laser irradiation, the obtained black yttrium oxide can be pulverized by a ball mill, a jet mill, or the like as necessary to obtain a laser absorbing oxide having a desired size.

In the embodiment of the present invention, the laser absorbing oxide is particularly used as a laser absorption aid. When only carbon is used as a laser absorbing material instead of the above laser absorbing oxide, a pore is easily formed on the surface of the sintered body or the like when carbon is evaporated as, for example, carbon dioxide gas or the like. On the other hand, when the laser absorbing oxide is used as in the embodiment of the present invention, there is no problem in the case of using the carbon.

Whether or not the laser absorbing oxide is obtained by the formation of the laser absorbing oxide described above can be confirmed, for example, by a method such as ultraviolet-visible absorption spectroscopy as shown in Examples described later.

Even if an amount of the laser absorbing oxide is very small, the laser absorbing oxide contributes to the promotion of the sintering reaction described above. From the viewpoint of more sufficiently exhibiting the effect of the laser absorbing oxide, a ratio of the laser absorbing oxide in the raw material is preferably 0.1% by mass or more, more preferably 1% by mass or more, and still more preferably 2.0% by mass or more. On the other hand, from the viewpoint of securing the ratio of the ceramic in the sintered body, the ratio of the laser absorbing oxide in the raw material is preferably 65% by mass or less, more preferably 40% by mass or less, still more preferably 20% by mass or less, and even more preferably 10% by mass or less.

(Ceramic powder)

The sintering ceramic powder constituting the article preferably contains at least one selected from aluminum oxide, aluminum nitride, and aluminum oxynitride.

A particle size of the ceramic powder is, for example, preferably 100 nm (0.1 $\mu$m) to 100 $\mu$m. For example, it is also possible to use a mixture of two or more kinds of ceramic powders having different particle sizes.

From the viewpoint of securing the ratio of the ceramic in the sintered body, the ratio of the ceramic powder in the raw material is preferably 35% by mass or more, more preferably 60% by mass or more, still more preferably 80% by mass or more, and even more preferably 90% by mass or more. On the other hand, from the viewpoint of more sufficiently exhibiting the above effect of the laser absorbing oxide, the ratio of the ceramic powder is preferably 99% by mass or less, more preferably 98.5% by mass or less, and still more preferably 98.0% by mass or less.

(Other materials that may be contained)

Examples of other materials that may be contained include a binder. Examples of the binder include a polymer binder. Examples of the polymer binder include those which are dissolved or dispersed in a medium composed of at least one of water and an organic solvent. Specific examples of the polymer binder include polyvinyl alcohol, polyvinyl acetal, an acrylic polymer, polyvinyl acetate, and polyvinyl butyral. When the polymer binder is contained, the ratio of the polymer binder in the raw material can be, for example, 5% by volume or less, further 3% by volume or less, and still further 1% by volume or less.

[Step 2] Article forming step

In the step 2, an article in which the ceramic powder and the laser absorbing oxide exist is formed using the raw material.

In the article according to the embodiment of the present invention, the laser absorbing oxide may exist in at least one of the articles. Thus, examples of an existence form of the laser absorbing oxide include a case where the laser absorbing oxide exists both on the surface and inside the article, a case where the laser absorbing oxide exists only on the surface, and a case where the laser absorbing oxide does not exist on the surface and exists only inside the article.

Examples of the article include an article consisting of the raw material, an article partially including a region consisting of only the raw material, and an article consisting of the raw material and formed on the base material.

In the embodiment of the present invention, an article containing a ceramic powder and a laser absorbing oxide may be formed using the raw material, and a specific method thereof is not limited. Examples of the method for forming an article include any one of the following methods (step A) and (step B), and a combination of these methods. In the present specification, the "article" refers to one containing the ceramic powder and the laser absorbing oxide. The "article" is distinguished from a "molded article" before disposing the laser absorbing oxide, which is obtained by molding the ceramic powder into an article shape in the middle of the following (step B).

(Step A) A method of forming an article by mixing the ceramic powder and the laser absorbing oxide and molding the mixture into an article shape.

(Step B) A method of forming an article by molding the ceramic powder into an article shape to obtain a molded article, and then disposing the laser absorbing oxide on a surface of the molded article.

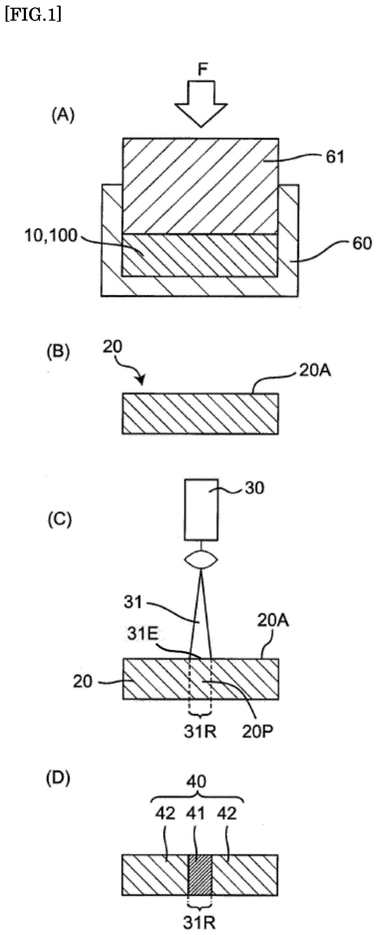

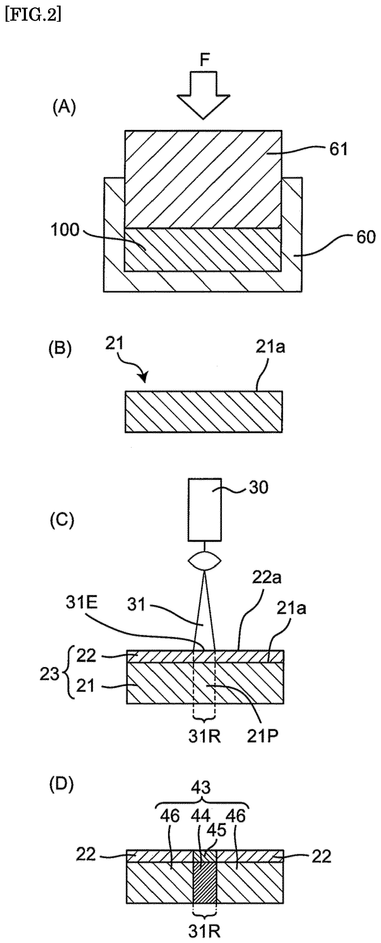

Hereinafter, (step A) will be described with reference to Figs. 1A and 1B, and (step B) will be described with reference to Figs. 2A and 2B.

First, in the (step A), a ceramic powder 100 and a laser absorbing oxide 10 are mixed to obtain a mixture. The mixing method is not particularly limited, and examples thereof include diffusion mixing with a mixer (double cone blender) or the like, and mixing while pulverizing with a ball mill, a jet mill, or the like.

When ceramic powders of a plurality of sizes are used as the ceramic powder 100, they may be premixed in advance before being mixed with the laser absorbing oxide to obtain a mixture of the ceramic powders.

A mixture of the ceramic powder and the laser absorbing oxide is used to form an article. For example, as shown in Fig. 1A, a mixture of the ceramic powder 100 and the laser absorbing oxide 10 is charged into a mold 60 for molding, and a pressure jig 61 is pressurized in a direction of an arrow F to perform pressure molding. As a result, as shown in Fig. 1B, an article 20 having a predetermined shape is obtained. In the pressure molding, the pressure can be set to 10 MPa to 30 MPa. As another method, the ceramic powder 100 and the laser absorbing oxide 10 may be subjected to injection molding, extrusion molding, screen printing, or the like to obtain an article.

The article 20 obtained by the (step A) is not necessarily required to be one in which the ceramic powder and the laser absorbing oxide are uniformly mixed and dispersed. Examples of the existence form of the laser absorbing oxide in the article 20 include a form in which a concentration of the laser absorbing oxide on a surface 20A (for example, the outermost surface to be irradiated with the laser) is higher than that inside the article 20, for example, a form in which the concentration of the laser absorbing oxide gradually increases from the inside of the article 20 toward the surface 20A, and other forms.

Since the laser does not stop at the surface of the article and reaches the inside of the article, as the existence form of the laser absorbing oxide, as described above, in addition to the case where the laser absorbing oxide exists both on the surface 20A and inside the article, the case where the laser absorbing oxide exists only on the surface 20A, and the case where the laser absorbing oxide does not exist on the surface 20A and exists only inside the article can also be included.

Next, the (step B) will be described. In the step B, first, a raw material containing a ceramic powder is molded into an article shape to obtain a molded article.

For example, as shown in Fig. 2A, the ceramic powder 100 is charged into the mold 60 for molding, and the pressure jig 61 is pressurized in the direction of the arrow F to perform pressure molding (press molding). As a result, as shown in Fig. 2B, an article 21 having a predetermined shape is obtained. In the pressure molding, the pressure can be set to 10 MPa to 30 MPa. As another method, the ceramic powder may be subjected to injection molding, extrusion molding, screen printing, or the like to obtain an article.

When ceramic powders of a plurality of sizes such as a large particle size and a small particle size are used as the ceramic powder 100, the ceramic powders may be premixed in advance, and a mixture of the ceramic powders may be subjected to pressure molding.

Next, a laser absorbing oxide layer 22 is disposed on a surface 21a of the molded article 21. As a result, an article 23 in which the molded article 21 and the laser absorbing oxide layer 22 are arranged is obtained. In Fig. 2, the laser absorbing oxide is illustrated as the laser absorbing oxide layer 22, however, the arrangement of the laser absorbing oxide is not limited thereto. That is, examples of a method of disposing the laser absorbing oxide include a spray method by spraying or the like, a printing method such as screen printing, and coating methods such as a doctor blade method, a spin coating method, and a curtain coater method, using only the laser absorbing oxide, a composition containing the laser absorbing oxide and a binder, or a composition containing the laser absorbing oxide and an organic solvent. The laser absorbing oxide may be formed on the entire surface 21a of the molded article 21 as shown in Fig. 2C, or may be partially formed only at a predetermined position of the surface 21a although not shown. For example, the laser absorbing oxide may be arranged in a dot pattern or the like.

In the above (step B), when a composition containing a laser absorbing oxide is formed on the article surface 21a, the ratio of the laser absorbing oxide contained in the composition is preferably 50% by mass or more, and more preferably 80% by mass or more, from the viewpoint of enhancing laser absorption capacity. A thickness at the time of disposing the laser absorbing oxide is preferably 5 nm to 30 $\mu$m, and more preferably 100 nm to 10 $\mu$m from the viewpoint of enhancing the laser absorption capacity.

The shape of the article is not limited to that illustrated in Figs. 1 and 2. That is, in addition to a flat plate shape, a curved plate shape, a rod shape, a cylindrical shape, a lump shape, a sheet shape, a combination thereof, or a modified shape thereof can be adopted.

[Step 3] Sintering step

In step 3, the surface of the article is irradiated with a laser to form a sintered portion. The sintering step will be described with reference to Figs. 1C and 1D in the case of sintering the article formed in (step A), and Figs. 2C and 2D in the case of sintering the article formed in (step B).

As shown in Fig. 1C or 2C, a laser 31 from the laser device 30 is applied to the surface 20A of the article 20 or a predetermined position of the surface 22a of the laser absorbing oxide layer 22 in the article 23. By this laser irradiation, the laser absorbing oxide in the article absorbs the energy of the laser and generates heat. Thereby, the region around the laser absorbing oxide is preheated. When the portion 20P of the article 20 or the portion 21P of the article 23 is further irradiated with a laser, the temperature rises. As a result, it is considered that the ceramic powder in the portion 20P or the portion 21P is sintered to form the sintered portion 41 or 44 (Fig. 1D, Fig. 2D). Thereby, the sintered portion 41 or 44 can be locally formed at a desired position (portion 20P or 21P) of the article 20 or 23. In the case of (step B), as shown in Fig. 2D, the laser-irradiated portion of the laser absorbing oxide layer 22 on the article surface can be a sintered portion 45 mainly composed of a white oxide obtained by reacting the laser absorbing oxide by laser irradiation.

In the article 20 or the article 23, a portion outside a range of a region 31R immediately below a irradiation position 31E is not sintered and becomes a non-sintered portion 42 or 46. The non-sintered portion 42 or 46 may be removed as necessary, or further additional laser irradiation may be performed to sinter the non-sintered portion 42 or 46, and thus to enlarge the sintered portion 41, or 44 and 45.

The laser 31 may be applied to only a part (predetermined position) of the surface 20A or the surface 22a as shown in Figs. 1C and 2C, or may be applied to the entire surface 20A or the entire surface 22a. As a method of irradiating the entire surface with the laser 31, there are a method of simultaneously irradiating the entire surface using the laser 31 having a large spot diameter (simultaneous irradiation) and a method of irradiating the entire surface by relatively moving the irradiation position of the laser 31 having a small spot diameter (scanning irradiation). Examples of the scanning irradiation include a method of scanning with a laser while the articles 20 and 23 are fixed, a method of applying a laser while changing an optical path of the laser through a light diffusion lens, and a method of applying a laser while moving the articles 20 and 23 while fixing the optical path of the laser.

The type of laser to be used is not particularly limited, and from the viewpoint of enhancing the laser absorption capacity, it is preferable to use a laser in a wavelength range (500 nm to 11 $\mu$m) having a high absorption rate by the laser absorbing oxide. For example, the laser is preferably any one of a Nd: YAG laser, a Nd: YVO laser, a Nd: YLF laser, a titanium sapphire laser, and a carbon dioxide laser.

The laser irradiation conditions are appropriately selected depending on the type of sintering ceramic, a sintering area, a sintering depth, and the like. The laser power is preferably 50 to 2000 W/cm$^2$, more preferably 100 to 500 W/cm$^2$ from the viewpoint of suitably progressing sintering. When the ceramic powder is aluminum oxide, the laser output is 100 to 1000 W, preferably 200 to 800 W, and more preferably 250 to 500 W. When the ceramic powder is aluminum nitride, the laser output is 50 to 1000 W, preferably 50 to 800 W, and more preferably 100 to 500 W. The irradiation time of the laser is preferably 1 second to 60 minutes, and more preferably 5 seconds to 30 minutes.

The articles 20 and 23 may be preheated before laser irradiation. A preheating temperature is preferably 300°C or higher, and more preferably 400°C or higher, and the upper limit of the preheating temperature is usually lower by 200°C or more than the melting point of the sintering ceramic. The preheating can be performed by, for example, an infrared lamp, a halogen lamp, resistance heating, high-frequency induction heating, microwave heating, or the like.

From the viewpoint of securing a beautiful appearance and the like, the sintered body may be obtained by changing the laser absorbing oxide used in the manufacturing to white. The laser absorbing oxide (for example, black yttrium oxide) can be changed to a white oxide (for example, white yttrium oxide) by laser irradiation in an oxygen-containing atmosphere or heat treatment by a heating furnace and the like.

In the step 3, in order to perform sintering and to change the laser absorbing oxide to white, the sintered portion may be formed by laser irradiation in an oxygen-containing atmosphere (for example, air atmosphere).

Alternatively, after sintering in the step 3, a step of changing the laser absorbing oxide to white may be further provided. In this case, in the step 3 (sintering step), for example, the sintered portion is formed by laser irradiation in a non-oxidizing atmosphere such as nitrogen, argon, or helium, and then as a further additional step, the sintered portion is irradiated with a laser in an oxygen-containing atmosphere (for example, air atmosphere). The conditions of laser irradiation for changing the laser absorbing oxide to a white oxide may be the same as or different from those of laser irradiation during sintering except for the atmosphere.

In the sintering step in the step 3, laser irradiation can also be performed under a plurality of conditions. For example, laser irradiation is performed in an anaerobic atmosphere, and then laser irradiation is performed in an air atmosphere.

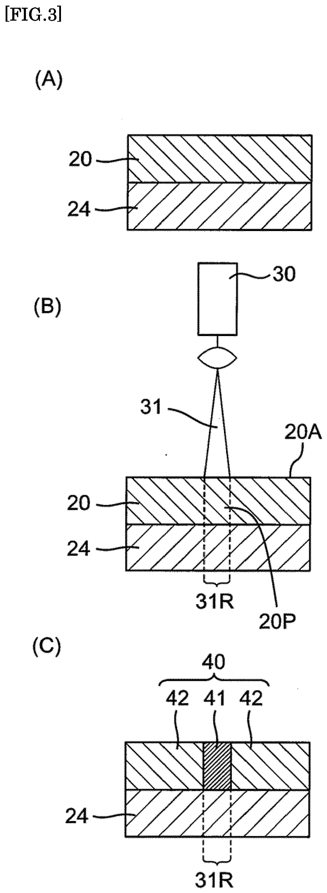

The article may be provided on a base material. For example, a case where an article is formed on the base material in the step A will be described with reference to Fig. 3 as an example. First, a mixture of the ceramic powder 100 and the laser absorbing oxide 10 is molded on the base material 24 to prepare the article 20 on the base material 24 as shown in Fig. 3A.

The base material 24 is preferably formed from at least one selected from a metal, an alloy, and a ceramic. As a method of forming the article 20 on the base material 24, the article can be formed by a conventionally known method such as a thermal spraying method, an electron beam physical vapor deposition method, a laser chemical vapor deposition method, a cold spraying method, and a method of coating a slurry including ceramic particles for sintering, a dispersion medium, and a polymer binder to be used as necessary, then drying the slurry, and further degreasing. The base material 24 and the article 20 may be joined, or the article 20 may be placed on the base material 24 without being joined.

Next, as shown in Fig. 3B, the surface 20A of the article 20 is irradiated with a laser to form the sintered portion 41 in the article 20 as shown in Fig. 3C. As a result, the sintered body 40 including the sintered portion 41 and the non-sintered portion 42 is formed on the base material 24.

(Sintered body)

As described above, the sintered body according to the embodiment of the present invention includes a case where the entire sintered body is sintered and a case where a desired portion is a sintered portion, that is, a case where the sintered body partially has the sintered portion and the remaining portion is a non-sintered portion. The sintered body preferably consists of only the sintered portion.

In the sintered body according to the embodiment of the present invention, the ceramic accounts for 50% by mass or more. As the ceramic, at least one selected from the group consisting of aluminum oxide, aluminum nitride, and aluminum oxynitride is preferably contained. More preferably, the ceramic is any of aluminum oxide, aluminum nitride, and aluminum oxynitride.

In the sintered body obtained by the method of the present disclosure, a laser absorbing oxide or a white oxide obtained by oxidation of the laser absorbing oxide may exist in the sintered portion. As the existence form thereof, for example, the oxide may exist as a composite oxide, a solid solution, a eutectic body, or the like of the oxide and the ceramic. The sintered portion may have a spherical, ellipsoidal, or polygonal structure, and for example, the particle size of crystal may be in a range of 0.01 $\mu$m to 50 pm, more preferably 0.1 $\mu$m to 20 $\mu$m.

In the sintered portion 45 obtained in the above (step B), the laser absorbing oxide layer 22 may be changed to a white oxide layer, and a composite oxide of a white oxide and a ceramic, a solid solution of a white oxide and a ceramic, a eutectic body of a white oxide and a ceramic, and the like may exist at an interface between the white oxide layer and the sintered portion 44.

For example, when a sintered body is obtained using aluminum nitride as the ceramic and black yttrium oxide as the laser absorbing oxide, a composite oxide or a eutectic body with aluminum nitride, aluminum oxide, black yttrium oxide, and white yttrium oxide obtained by oxidation of black yttrium oxide can be obtained in the sintered portion.

One aspect of the sintered body according to the embodiment of the present invention is a dense body, and examples thereof include one having, for example, a porosity of 10% or less. Another aspect of the sintered body according to the embodiment of the present invention is a porous body, and examples thereof include one having, for example, a porosity of more than 10% and 80% or less.

Examples of the sintered body include a sintered body obtained using aluminum nitride as the dense body and black yttrium oxide as the laser absorbing oxide. For example, a sintered body of Example 2 shown in Examples described later is exemplified. Examples of the sintered body include a sintered body obtained using aluminum oxide as the porous body and black yttrium oxide as the laser absorbing oxide. For example, a sintered body of Example 1 shown in Examples described later is exemplified.

[Examples]

Hereinafter, the embodiment of the present invention will be described more specifically with reference to Examples. The present disclosure is not limited by the following examples, and can be implemented with appropriate modifications within a range that can be consistent with the above-described and later-described gist, and any of them is included in the technical scope of the present disclosure.

[Example 1]

(Provision of black yttria powder)

White yttria (particle size: 1 $\mu$m) was loaded in a mold for pellet molding (cylindrical shape with an inner diameter of 10 mm), and pressurized at 10 MPa for 30 seconds with a uniaxial pressing machine to obtain white yttria pellet. An aerosol dry graphite film-forming lubricant "DGF spray" (trade name) manufactured by Nihon Senpakukougu Corporation was sprayed onto a surface of the white yttria pellet for about 1 second. Thereafter, this was allowed to stand for 30 seconds to obtain a laminate sample including a carbon powder-containing layer having a thickness of about 5 $\mu$m. A surface of the laminate sample was irradiated with a laser having a wavelength of 1064 nm and an output of 300 W for 1 minute to obtain a black yttria sintered body (BET: 3.8 $m^2$/g). The obtained black yttria sintered body was dry-ball milled to obtain a black yttria powder (BET: 33.0 m2/g).

Next, at a certain laser wavelength, measurement was performed to determine how higher the absorption rate of the black yttria powder was than the absorption rate of the ceramic powder. Specifically, the absorption rate of the ceramic powder and the absorption rate of the black yttria powder at a certain laser wavelength were each determined based on an ultraviolet-visible absorption spectrum in a wavelength range of 400 nm to 1500 nm measured by the following method. As the ceramic powder, a powder of aluminum oxide or aluminum nitride was used.

(Method of measuring ultraviolet-visible absorption spectrum)

A powder sample was molded into a pellet having a thickness of about 2 mm by press molding, then a transmission spectrum and a reflection spectrum were measured using an ultraviolet-visible absorption spectrophotometer, a transmittance (T%) and a reflectance (R%) were obtained, and an absorption rate (A%) was obtained by following the following equation.

$$A(\%)=100(\%)\text{-}T(\%)\text{-}R(\%)$$

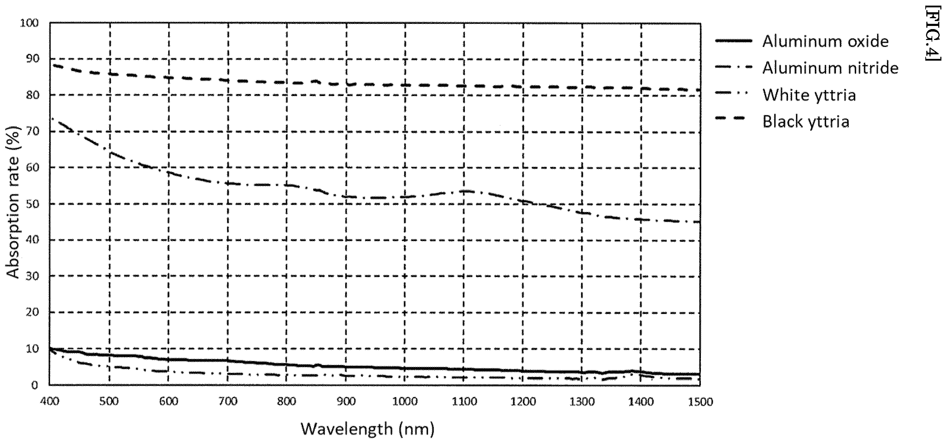

The results obtained by the above measurement are shown in Fig. 4. Fig. 4 also shows the absorption rate of white yttria for reference. As shown in Fig. 4, a difference in absorption rate determined from (the absorption rate of the black yttria powder at each wavelength) - (the absorption rate of the ceramic powder at each wavelength) was 5% or more at any wavelength in the range of 400 nm to 1500 nm and in any case where the ceramic powder was aluminum oxide or aluminum nitride. In particular, when a powder of aluminum nitride was used as the ceramic powder, the difference in the absorption rate was 10% or more at any of the wavelengths, and in particular, when the wavelength was 600 nm or more, the difference in the absorption rate was 20% or more. When a powder of aluminum oxide was used as the ceramic powder, the difference in the absorption rate was 70% or more at any of the above wavelengths, and black yttria showed a sufficiently high absorption rate as compared with the ceramic powder.

(Formation of article)

As the ceramic powder, an aluminum oxide powder (particle size: 0.15 $\mu$m) and the black yttria powder were uniformly dispersed and mixed while being pulverized in a wet ball mill at a ratio shown in Table 1, and further dried to obtain a mixed powder sample. The obtained mixed powder sample was loaded in a mold for pellet molding (cylindrical shape with an inner diameter of 10 mm) and pressurized at 10 MPa for 30 seconds with a uniaxial pressing machine to obtain a pellet for sintering as an article.

(Sintering by laser irradiation)

A surface of the pellet for sintering was irradiated with a laser having a wavelength of 1064 nm and an output of 300 W for 30 seconds. The atmosphere at the time of laser irradiation was the air. At this time, a beam diameter was set to 10 mm, and the position of the laser was adjusted so that the entire pellet for sintering (diameter: 10 mm) could be lasersintered. As a result, the entire pellet for sintering was sintered to obtain a sintered body sample not including a non-sintered portion (that is, the entire sample was formed from the sintered portion).

[Example 2]

A sintered body sample was obtained in the same manner as in Example 1 except that the aluminum oxide powder in Example 1 was changed to an aluminum nitride powder (particle size: 0.10 $\mu$m) and the laser output was changed to 250 W.

[Example 3]

A sintered body sample was obtained in the same manner as in Example 1 except that the laser output in Example 1 was changed to 400 W.

[Example 4]

A sintered body sample was obtained in the same manner as in Example 2 except that the laser output in Example 2 was changed to 150 W.

[Example 5]

A sintered body sample was obtained in the same manner as in Example 1 except that the laser output in Example 1 was changed to 200 W.

[Comparative Example 1]

A sintered body sample was obtained in the same manner as in Example 1 except that the black yttria powder in Example 1 was changed to a white yttria powder (particle size: 1 pm).

[Comparative Example 2]

A sintered body sample was obtained in the same manner as in Example 2 except that the black yttria powder in Example 2 was changed to a white yttria powder (particle size: 1 $\mu$m).

(Evaluation of sinterability and shape of sintered body)

Sinterability was determined from a scanning electron micrograph. Specifically, a scanning electron micrograph of 5000 times or more was taken, and from the photograph, a case where connection between particles was observed over the entire photographed region, or a case where a dense microstructure of the level where particles could not be discriminated due to further progress of connection between particles was observed was rated ◦ as "good", a case where connection between particles was observed in a part of the photographed region was rated $\Delta$ as "acceptable", and a case where connection between particles was not observed was rated $\times$ as "not acceptable". The case where the evaluation result was $\Delta$ or ◦ was determined that "sinterability was high".

[Table 1]

| | Ceramic for sintering | | Laser absorbing oxide | | Laser sintering | | Sinter ability | Shape of sintered body |
| --- | --- | --- | --- | --- | --- | --- | --- | --- |
| | Type | Ratio (wt%) | Type | Ratio (wt%) | Laser output (W) | Laser irradiation time (sec) | | |
| Example 1 | Aluminum oxide | 97 | Black yttrium oxide | 3 | 300 | 30 | ○ | Porous body |
| Example 2 | Aluminum nitride | 97 | Black yttrium oxide | 3 | 250 | 30 | ○ | Dense body |
| Example 3 | Aluminum oxide | 97 | Black yttrium oxide | 3 | 400 | 30 | ○ | Porous body |
| Example 4 | Aluminum nitride | 97 | Black yttrium oxide | 3 | 150 | 30 | ○ | Porous body |
| Example 5 | Aluminum oxide | 97 | Black yttrium oxide | 3 | 200 | 30 | $\Delta$ | Porous body |
| Comparative Example 1 | Aluminum oxide | 97 | White yttrium oxide | 3 | 300 | 30 | $\times$ | Porous body |
| Comparative Example 2 | Aluminum nitride | 97 | White yttrium oxide | 3 | 250 | 30 | $\times$ | Porous body |

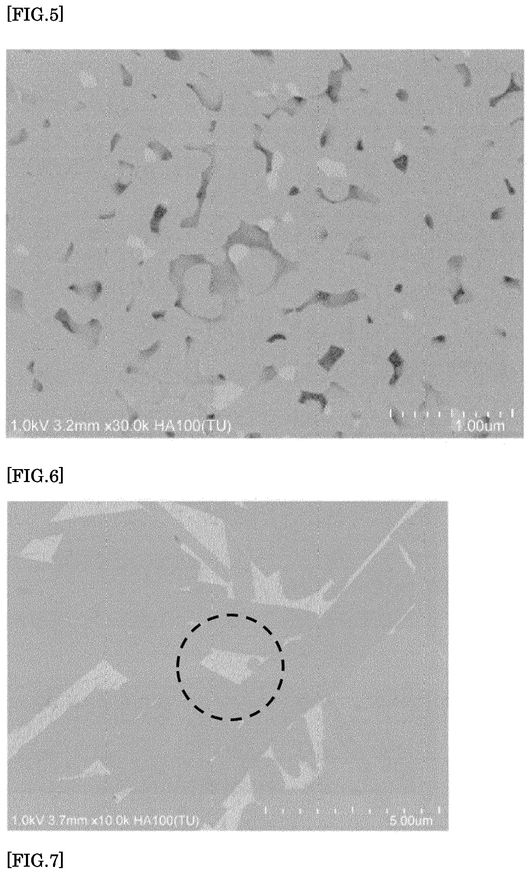

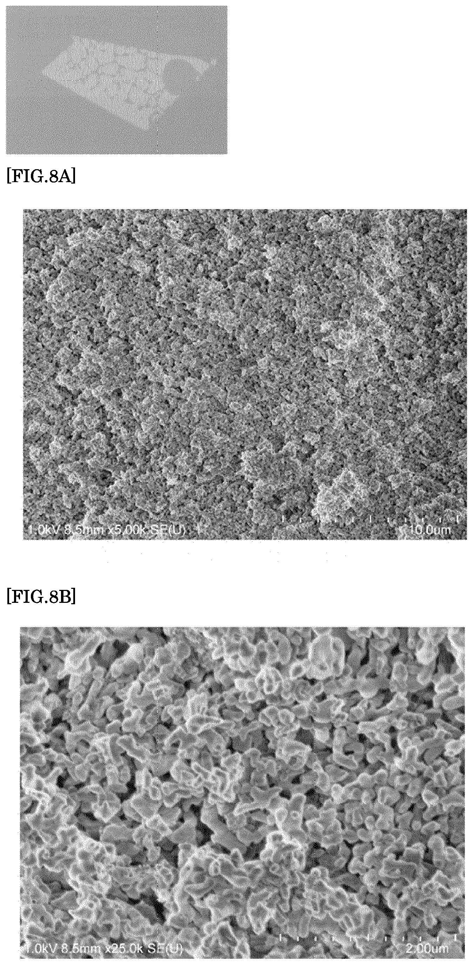

A scanning electron micrograph of the sintered body of Example 1 is shown in Fig. 5. A scanning electron micrograph of the sintered body of Example 2 is shown in Fig. 6. A scanning electron micrograph enlarging a broken line portion in Fig. 6 is shown in Fig. 7. In addition, a scanning electron micrograph of the sintered body of Comparative Example 1 is shown in Figs. 8A and 8B. Fig. 8B is a scanning electron micrograph obtained by enlarging a part of the scanning electron micrograph of Fig. 8A.

From the results in Table 1 and the scanning electron micrographs in Figs. 5 to 8A and 8B, it can be seen that the ceramic is not sintered and remains in a particulate form in Comparative Example, whereas the ceramic is sufficiently sintered and the sintered body can be manufactured in a short time when the article containing the laser absorbing oxide and the ceramic is irradiated with the laser as in the embodiment of the present invention.

The present application claims priority based on Japanese Patent Application No. 2020-030911. The disclosure of which is incorporated by reference herein.

REFERENCE SIGNS LIST

    10: Laser absorbing oxide
    100: Ceramic powder
    20, 23: Article
    20A: Surface of article
    20P, 21P: Portion existing in region immediately below laser irradiation position
    21: Molded article
    21a: Surface of molded article
    22: Laser absorbing oxide layer
    22a: Surface of laser absorbing oxide layer
    24: Base material
    30: Laser irradiation means
    31: Laser
    31E: Laser irradiation position
    31R: Region immediately below laser irradiation position
    40, 43: Sintered body
    41, 44, 45: Sintered portion
    42, 46: Non-sintered portion
    60: Mold
    61: Pressure jig

**Claims**

1. A method for manufacturing a sintered body by sintering with laser irradiation, the method comprising:

   a raw material providing step of providing a raw material containing a ceramic powder and a laser absorbing oxide having an absorption rate at a laser wavelength higher by 5% or more than that of the ceramic powder;
   an article forming step of forming an article formed from the raw material, an article partially including a region consisting of only the raw material, or an article formed from the raw material and formed on a base material; and
   a sintering step of irradiating the article with a laser to form a sintered portion.

2. The method for manufacturing a sintered body according to claim 1, wherein in the article forming step, the ceramic powder and the laser absorbing oxide are mixed and molded into an article shape to form an article.

3. The method for manufacturing a sintered body according to claim 1, wherein in the article forming step, the ceramic powder is molded into an article shape to obtain a molded article, and then the laser absorbing oxide is disposed on a surface of the molded article to form an article.

4. The method for manufacturing a sintered body according to any one of claims 1 to 3, wherein the laser absorbing oxide is one or more selected from the group consisting of magnesium oxide and rare earth element-containing oxide.

5. The method for manufacturing a sintered body according to claim 4, wherein the rare earth element-containing oxide is yttrium oxide.

6. The method for manufacturing a sintered body according to any one of claims 1 to 5, wherein in the raw materials, a ratio of the laser absorbing oxide is 1% by mass or more and 65% by mass or less, and a ratio of the ceramic powder is 35% by mass or more and 99% by mass or less.

7. The method for manufacturing a sintered body according to any one of claims 1 to 6, wherein the laser is any one of a Nd: YAG laser, a Nd: YVO laser, a Nd: YLF laser, a titanium sapphire laser, and a carbon dioxide laser.

8. The method for manufacturing a sintered body according to any one of claims 1 to 7, wherein in the sintering step, the sintered portion is formed by laser irradiation in an air atmosphere.

9. The method for manufacturing a sintered body according to any one of claims 1 to 7, wherein in the sintering step, the sintered portion is formed by laser irradiation in a non-oxidizing atmosphere, and then laser irradiation of the sintered portion is further performed in an air atmosphere.

10. The method for manufacturing a sintered body according to any one of claims 1 to 9, wherein in the raw material providing step, white yttrium oxide is irradiated with a laser in a non-oxidizing atmosphere to obtain black yttrium oxide as the laser absorbing oxide.

11. The method for manufacturing a sintered body according to any one of claims 1 to 10, wherein the ceramic powder contains at least one selected from the group consisting of aluminum oxide, aluminum nitride, and aluminum oxynitride.

[FIG.1]

(A)

F

61

10,100

60

(B)

20

20A

(C)

30

31

31E

20

20A

31R    20P

(D)

40

42  41  42

31R

[FIG.2]

(A)

F

61

100

60

(B)

21

21a

(C)

30

31E    31    22a
                    21a

22
23
21

31R    21P

(D)

43

46  44  46
    45

22                    22

31R

[FIG.3]

(A)

20

24

(B)

30

31

20A

20

24

31R

20P

(C)

40

42  41  42

24

31R

[FIG.4]

[FIG.5]

[FIG.6]

[FIG.7]

[FIG.8A]

[FIG.8B]

## INTERNATIONAL SEARCH REPORT

| International application No. |
| --- |
| PCT/JP2021/005908 |

### A. CLASSIFICATION OF SUBJECT MATTER
Int.Cl. C04B35/64(2006.01)i, C04B35/117(2006.01)i
FI: C04B35/64, C04B35/117

According to International Patent Classification (IPC) or to both national classification and IPC

### B. FIELDS SEARCHED
Minimum documentation searched (classification system followed by classification symbols)
Int.Cl. C04B35/64, C04B35/117

Documentation searched other than minimum documentation to the extent that such documents are included in the fields searched
Published examined utility model applications of Japan    1922-1996
Published unexamined utility model applications of Japan   1971-2021
Registered utility model specifications of Japan          1996-2021
Published registered utility model applications of Japan  1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>A | JP 2019-19051 A (CANON INC.) 07 February 2019<br>(2019-02-07), paragraphs [0012]-[0019], [0029],<br>[0030], [0050]-[0109], fig. 1-6 | 1-4, 6-9, 11<br>5, 10 |
| A | JP 2018-135223 A (JAPAN FINE CERAMICS CENTER) 30<br>August 2018 (2018-08-30), entire text, all<br>drawings | 1-11 |
| A | JP 2017-141146 A (JAPAN FINE CERAMICS CENTER) 17<br>August 2017 (2017-08-17), entire text, all<br>drawings | 1-11 |
| A | JP 2015-163558 A (KAGAWA PREFECTURE) 10 September<br>2015 (2015-09-10), entire text, all drawings | 1-11 |

☐ Further documents are listed in the continuation of Box C.        ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    16 March 2021 | Date of mailing of the international search report<br>    23 March 2021 |
| --- | --- |
| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |

Form PCT/ISA/210 (second sheet) (January 2015)

INTERNATIONAL SEARCH REPORT
Information on patent family members

International application No.

PCT/JP2021/005908

| | | |
|---|---|---|
| JP 2019-19051 A | 07 February 2019 | US 2020/0140340 A1<br>paragraphs [0019]-[0028],<br>[0040], [0041], [0062]-[0112], fig. 1-6<br>WO 2019/013334 A1<br>EP 3636403 A1<br>CN 110944814 A |
| JP 2018-135223 A | 30 August 2018 | (Family: none) |
| JP 2017-141146 A | 17 August 2017 | US 2019/0054653 A1<br>whole document, all drawings<br>WO 2017/135387 A1<br>EP 3412642 A<br>CN 108602726 A<br>KR 10-2018-0111860 A |
| JP 2015-163558 A | 10 September 2015 | (Family: none) |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016527161 T

- JP 2020030911 A